# EUROPEAN PATENT APPLICATION

(11) **EP 0 811 660 A1**
(43) Date of publication of application: **10.12.1997**
(21) Application number: 96903207.7
(22) Date of filing: 22.02.1996
(51) Int. Cl.: C08L 67/02

(54) **MOLDING RESIN COMPOSITION**

(30) Priority: 24.02.1995 JP 36806/95
(71) Applicant: KANEGAFUCHI KAGAKU KOGYO KABUSHIKI KAISHA, Kita-ku Osaka-shi Osaka-fu 530 (JP)
(72) Inventor: TAMAI, Kazuhiko, Hyogo 655 (JP); KURIMOTO, Kenji, Hyogo 655 (JP); TOMITA, Haruo, Kobe-shi Hyogo 654-01 (JP)
(74) Representative: VOSSIUS & PARTNER
(86) International application number: JP9600396
(87) International publication number: WO9626981

(57) **Abstract**

There is provided a molding resin composition comprising:
(A) 100 parts (by weight, hereinafter the same applies) of a polyester resin,
(B) 1 to 100 parts of a graft modified polyolefin resin prepared by impregnating 0.1 to 30 parts of at least one selected from N-glycidyloxy-substituted benzyl (met) acrylate and glycidyl (met)acrylate, 1 to 500 parts of a vinyl monomer to 100 parts of a polyolefin resin to form an aqueous suspention, then polymerizing, and
(C) 0.1 to 20 parts of a copolymer comprising 99 to 50 % (by weight, hereinafter the same applies) of a specific vinyl monomer and 1 to 50 % of glycidyl methacrylate.

The resin composition has improved properties of polyester resins such as melt tension and mechanical properties, and stable molding properties and recyclability.

## Description

### Technical Field

The present invention relates to a molding resin composition. More particularly, the present invention relates to a molding resin composition in which mechanical properties of polyester resins such as melt tension and impact resistance are improved to allow the resin to be molded more stably and recycled usefully.

### Background Art

A polyester resin typically represented by polyethylene terephthalate and polybutylene terephthalate is widely used as various parts in the field of automobile, electric and electronics, precision machinery and the like because of superior physical and chemical properties thereof such as mechanical, insulating and molding properties. Most of such parts are molded by injection molding.

As the polyester resin is recently used in high-leveled or specific fields, it is expected, in addition to conventional injection molded products, to provite blow molded parts as alrger hollow articels at a low cost.

It is substantially impossible, however, to produse blow molded polyester articles in a desired shape because of serious drawdown during blow molding due to lower melt tention thereof.

Although the polyester resin has superior physical and chemical properties as stated above, toughness thereof such as impact resistance in particular is insufficient and is desirably improved to widen various use of the resin.

In order to improve such a disadvantage of the polyester resin, i.e., lower melt tention, it has been proposed to employ a resin having high degree of polymerization or a branched resin, or to add various fillers thereto, but none of these proposals are practical and sufficient to solve the problems.

It has been also proposed to add an epoxy compound or a copolymer of ethylene and α, β-unsuturated glycidylester to the polyester resin so as to increase melt tention and improve drawdown thereof, but thus obtained resin compositions are still not enough effective and can not yield homogeneously molded articles because of instability of the molding properties.

Futher, a method in which a styrene copolymer having epoxy groups is added to the polyester resin has been disclosed. As a result, melt tention and blow molding properaties of the resin compositions are practically improved, but such properties thus improved are again decreased when molded articels are reused, thereby impact resistance being also decreacsed.

Japanese Patent Kokai (Laid-open) No.6-145,481 discloses a method in which a styrene polymer having a glycidyl ester group and a modified polyolefin prepared from a specific modifier containing a glycidyl group and a polyolefin resin by a heat treatment thereof such as melt kneading in the presence of a radical intiator. Accoding to the disclosed method, blow molding properties of the polyester resin is improved and, at the same time, a decrease in melt tension can be suppressed when the resin is reused. However, the resin is still unsatisfactory because molding flow proparties thereof are not stable and melt viscosity is often increases considerably.

It is an object of the present invention to improve mechanical properties of conventional polyester resins such as melt tension and impact resistance so as to provide a molding resin composition which can be molded more stably and recycled more usefully. The above mentioned and other objects of the present invention can be achieved by blending a polyester resin with a graft modified polyolefin resin and a vinyl copolymer having a glyciydl group, the geraft modified polyolefin resin being prepared by subjecting a polyolefin resin existed as an aqueous suspention, a modifier having a specific glycidyl group and a vinyl monomer to an impregnating treatment and then reacting a mixture thus obtained in the presence of a radical initiator.

### Disclosure of the Invention

According to the present invention, there is provided a molding resin composition which comprises:
(A) 100 parts (parts by weight, the same applies hereinafter) of a polyester resin;
(B) 1 to 100 parts of a graft modified polylefin resin prepared by forming a aqueous suspension including
   (b1) 100 parts of a polyolefin resin,
   (b2) 0.1 to 30 parts of a monomer having at least one glycidyl group, which is selected from the group consisting of a monomer represented by the following formula (I): 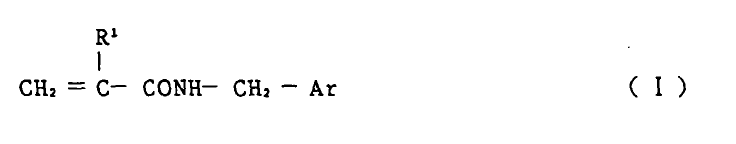 wherein Ar represents an aromatic hydrocarbon group having 6 to 23 carbon atoms bonded to at least one glycidyloxy group and R¹ represents a hydrogen atom or a methyl group;
      and a monomer represented by the following formula (II): 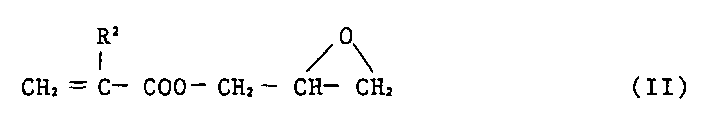 wherein R² represents a hydrogen atom or a methyl group; and
   (b3) 1 to 500 parts of a vinyl monomer, and
   (b4) 0.001 to 10 parts of a radical initiator based on 100 parts of the total weight of the components (b2) and (b3), impregnating the component (b1) with the components (b2) and (b3) in said aqueous suspension and polymerizing the components (b2) and (b3);
(C) 0.1 to 20 parts of a glycidyl group containing vinyl copolymer comprising 99 to 50 % (% by weight, the same applies hereinafter) of at least one vinyl monomer selected from the group consisting of styrene, α-methylstyrene, acrylonitrile, methyl methacrylate, butyl methacrylate, brominated styrene and phenyl maleinimide and 1 to 50 % of glycidyl methacrylate (Claim 1).

The molding resin composition claimed in Claim 1, in which the component (A) is polyethylene terephthalate, polybutylene terephthalate or a mixture thereof (Claim 2).

The molding resin composition claimed in Claim 1, in which the component (b1) (polyolefin resin) is a polymer of at least one compound selected from the group consisting of ethylene, propylene, 1-butene, isobutene, 1-pentene, butadiene, isoprene, chloroprene, cyclopentadiene, phenylpropadiene, dicyclopentadiene, 1,4-hexadiene, 1,4-heptadiene, 1,3-cyclohexadiene, 1,3-octadiene, 1,5-cyclooctadiene, 6-methyl-1,5-heptadiene, 1,5-cyclooctadiene, 2,5-norbornadiene, 2-methyl-2,5-norbornadiene, 5-methylidene-2-norbornene, 5-ethylidene-2-norbornene, 5-n-propylidene-2-norbornene, 5-isobutylidene-2-norbornene, 5-n-butylidene-2-norbornene and methyltetrahydroindene, or a mixture of more than two kinds of said polymer (Claim 3).

The molding resin composition claimed in Claim 1, in which the component (b2) is represented by the following formula (III): 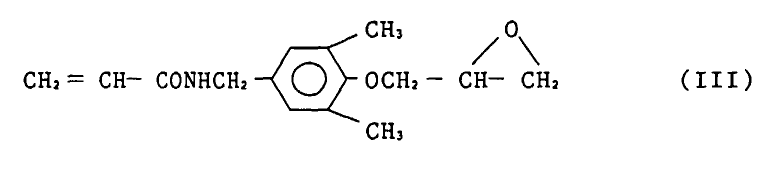 (Claim 4).

The molding resin composition claimed in Claim 1, in which the component (b2) is glycidyl methacrylate (Claim 5).

The molding resin composition claimed in Claim 1, in which the component (b2) is a mixture of 1 to 99 % of a compound represented by the following formula (III): 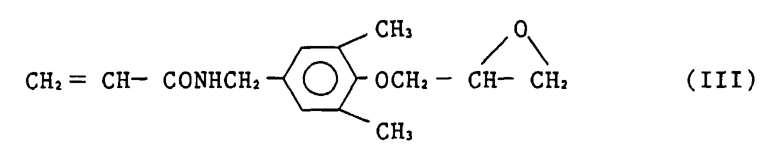 and 99 to 1 % of glycidyl methacrylate (Claim 6).

The molding resin composition claimed in Claim 1, in which the component (b3) is at least one compound selected from the group consisting of an aromatic vinyl compound, an alkylacrylate having an alkyl group of 1 to 22 carbon atoms, an alkyl methacrylate having an alkyl group of 1 to 22 carbon atoms, a vinyl alkyl ether having an alkyl group of 1 to 22 carbon atoms, a vinyl alcohol, an unsaturated nitrile compound, an unsaturated amino compound, a dialkyl maleate having alkyl groups of 1 to 9 carbon atoms, an allyl alkyl ether having an alkyl group of 1 to 8 carbon atoms, allyl acrylate, a diene compound, maleic anhydride, maleic acid, acrylic acid, methacrylic acid and vinyl acetate (Claim 7).

Further, the composition of the present invention also includes the following:
The molding resin composition in which 1 to 100 parts of at least one filler selected from the group consisting of silica, talc, mica, glass fiber, neutral clay, carbon fiber, aromatic polyamide fiber, silicon carbide fiber and titanic acid fiber are added to 100 parts of the resin composition claimed in any one of Claims 1 to 7 (Claim 8); and
The molding resin composition in which 1 to 50 parts of at least one fire retardant selected from the group consisting of halogenated fire retardants such as tetrabromobisphenol A, 2,2-bis (4-hydroxy-3,5-dibromophenyl) propane, hexabromobenzene, tris (2,3-dibromopropyl) isocyanurate, 2,2-bis (4-hydroxyethoxy-3,5-dibromophenyl) propane, decabromodiphenyl oxide, brominated polyphosphate, chlorinated polyphosphate, chlorinated paraffin, etc.; phosphorus fire retardants such as ammonium phosphate, tricresyl phosphate, triethyl phosphate, trischloroethyl phosphate, tris (β-chloroethyl) phosphate, tris (dichloropropyl) phosphate, cresylphenyl phosphate, xylenyldiphenyl phosphate, acid phosphate, nitrogen containing phosphorus compounds, etc.; inorganic fire retardants such as red phosphorus, tin oxide, antimony trioxide, zirconium hydroxide, barium metaborate, aluminum hydroxide, magnesium hydroxide, etc.; and macromolecular fire retardants such as brominated polystyrene, brominated poly-α-methylstyrene, brominated polycarbonate, brominated polyepoxy resin, chlorinated polyethylene, chlorinated poly-α-methylstyrene, chlorinated polycarbonate, chlorinated polyepoxy resin, etc., are added to 100 parts of (A) to (C) contained in the molding resin composition claimed in any one of Claims 1 to 8 (Claim 9).

### Best Mode for Carrying Out the Invention

The polyester resin used in the present invention as the component (A) is not especially restricted if such resin is a thermoplastic polyester resin and may includes, for example, polymers and copolymers prepared by condensation reaction of an aromatic dicarboxylic acid or an ester-forming derivative thereof and a diol or an ester-forming derivative thereof as main components, as well as ring opened polymers of lactones and the like.

The above mentioned aromatic dicarboxylic acid includes terephthalic acid, isophthalic acid, phthalic acid, 2,6-napthalenedicarboxylic acid, bis (p-carboxypheneyl) methane, anthracenedicarboxylic acid, 4,4'-diphenyldicarboxylic acid, 4,4-diphenyl ether dicarboxylic acid, etc., while the ester-forming derivative thereof corresponds to those compounds derived from these aromatic dicarboxylic acids. Such aromatic dicarboxylic acids or corresponding esteri-forming derivatives thereof may be used alone or in combination of two or more.

The above mentioned diol includes aliphatic diols having 2 to 10 carbon atoms such as ethylene glycol, 1,3-propanediol, 1,4-butanediol, neopentylglycol, 1,5-pentanediol, 1,6-hexanediol, 1,8-otanediol, cyclohexanediol, etc, as well as long chain glycols having a molecular weight of 400 to 6,000 such as polyethylene glycol, poly-1,3-propyrene glycol, polytetramethylene glycol, etc., while the ester-forming derivative thereof corresponds to those compounds derived from these diols. Such diols or a corresponding ester-forming derivatives thereof may be used alone or in combination of two or more.

The above mentioned polyester resin includes, for example, polyethylene terephthalate, polybutylene terephthalate, polyhexamethylene therephthalate, polyethylene-2,6-naphthalate, a mixture of polyethylene terephthalate and polybutylene terephthalate, etc.

The graft modified polyolefin resin used in the present invention as the component (B) is prepared by forming an aqueous suspension comprising a polyolefin resin as the component (b1), a monomer having at least one glycidyl group as the component (b2) selected from the group consisting a monomer represented by the following formula (I): 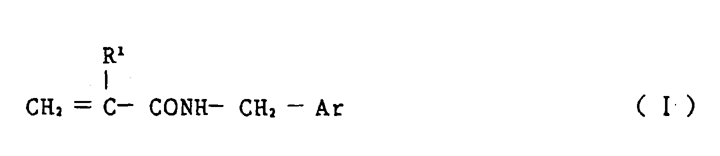 wherein Ar represents an aromatic hydrocarbon group having 6 to 23 carbon atoms bonded to at least one glycidyloxy group and R¹ represents a hydrogen atom or a methyl group; and a monomer represented by the follwing fromula (II): 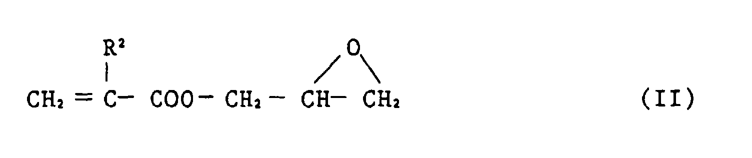 wherein R² represents a hydrogen atom or a methyl group;
a vinyl monomer as the component (b3) and a radical initiator as the component (b4), impregnating the component (b1) with the cpmponents (b2) and (b3) in the aqueous suspension and polymerizing the components (b2) and (b3).

Proportion of these components (b1), (b2) and (b3) in the aueous suspension is 0.1 to 30 parts, preferably 0.1 to 15 parts of the component (b2) and 1 to 500 parts, preferably 1 to 200 parts and more preferably 1 to 100 parts of the component (b3) based on 100 parts of the component (b1). Mechanical properties and fluidity of the obtained molding resin composition decrease at a higher level of (b2) than those portions described above, while blow molding properties decreases at a lower level thereof. On the other hand, when a level of the component (b3) is higher than those portions described above, excessive aggregation, fusion or blocking of the components in the aqueous suspension are occurred during polymerization, because the viny monomer is predominantly polymerized, and when it is lower, a uniform impregnation of (b1) with (b2) and graft polymerization of (b2) onto (b1) become difficult.

The component (b1) (polyolefine resin) as a fundamental constituent of the graft modified olefin resin includes a polymer comprising at least one monomer selected from the group consisting of ethylene, propylene, 1-butene, isobutene, 1-pentene, butadiene, isoprene, chloroprene, cyclopentadiene, phenylpropadiene, dicyclopentadiene, 1,4-hexadiene, 1,4-heptadiene, 1,3-cyclohexadiene, 1,3-octadiene, 1,5-cyclooctadiene, 6-methyl-1,5-heptadiene, 2,5-norbornadiene, 2-methyl-2,5-norbornadiene, 5-methylidene-2-norbornene, 5-ethylidene-2-norbornene, 5-n-propylidene-2-norbornene, 5-isobutylidene-2-norbornene, 5-n-butylidene-2-norbornene and methyltetrahydroindene, or a mixture of more than two kinds of said polymer.

The monomer represented by the formula (I), one of the components (b2), for modifying the component (b1) has an aromatic hydrocarbon residue of 6 to 23 carbon atoms comprising a (met)acrylamide group and at least one glycidyloxy group in a molecule. As the monomer represented by the formula (I) has a (meth)acrylamide group, a radical polymerisation reaction occurs in the presence of a radical initiator when it contacts with the other vinyl monomer, while, due to at least one glycidyl group, an ion opening reaction occurs when it contacts with a compound having an active proton such as hydroxyl group, acid group, acid anhydride group, amide group, etc.

The above mentioned component (b2) can be prepared, e. g., according to a method as described in Japanese Patent Kokai (Laid-open) No. 60-130,580, by condensating an aromatic hydrocarbon having at least one phenolic hydroxyl group with N-methylol (met)acrylamide in the presence of an acidic catalyst and then glycidylizing the hydroxyl group with epihalohydrin.

Penolic compounds of 6 to 23 carbon atoms are used as the above mentioned aromatic hydrocarbon having at least one phenolic hydroxyl group.

Such phenolic compounds includes, for example, phenol, cresol, xylenol, carvacrol, thymol, naphthol, resorcinol, hydroquinone, pyrogllol, phenanthrol, etc. Mono-valent phenol having an alkyl substituent group is preferable, in particular. When 2,6-xylenol and N-methylol acrylamide are used as starting meterials, a compound represented the following formula (III): 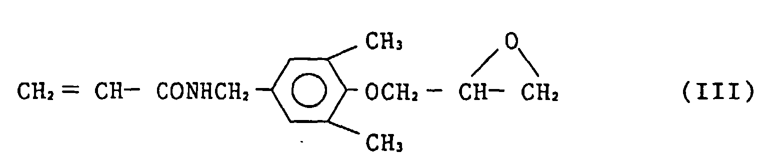 is obtained.

The monomer represented by the formula (II), the other one of the components (b2), for modifying the component (b1) has an acrylic or methacrylic ester group and a glycidyl group. As the monomer represented by the formula (II) has a (met)acrylic ester group, a radical polymerization reaction occurs in the presence of a radical initiator when it contacts with the other vinyl monomer, while, due to at least one glycidyl group, an ion opening reaction occurs when it contacts with a compound having an active proton such as hydroxyl group, acid group, acid anhydride group, amide group, etc.

The component (b3) as a fundamental constituent of the component (B) is used to improve compatibility between the components (A) and (B) as well as impregnating properties of the component (b2) to the component (b1). Examples of the component (b3) include an aromatic vinyl compound such as styrene, o-methylstyrene, p-methylstyrene, m-methylstyrene, α-methylstyren, divinylbenzene, etc.; alkyl methacrylate having an alkyl group of 1 to 22 carbon atoms such as methyl methacrylate, ethyl methacrylate, i-propyl methacrylate, n-butyl methacrylate, t-butyl methacrylate, 2-ethylhexyle methacrylate, stearyl methacrylate, etc.; alkyl acrylate having an alkyl group of 1 to 22 carbon atoms such as methyl acrylate, ethyl acrylate, i-propyl acrylate, n-butyl acrylate, t-butyl acrylate, 2-ethylhexyl acrylate, stearyl acrylate, etc.; vinyl alkyl ether having an alkyl group of 1 to 22 carbon atoms such as vinyl methyl ether, vinyl ethyl ether, vinyl n-propyl ether, vinyl i-propyl ether, vinyl i-butyl ether, vinyl n-amyl ether, vinyl i-amyl ether, vinyl 2-ethylhexyl ether, vinyl octadecyl ether, etc. ; an unsuturated nitril compound such as acrylonitrile, methacrylonitrile, etc.; an unsuturated amide compound such as acrylamide, methacrylamide, etc.; dialkyl maleate having an alkyl group of 1 to 9 carbon atoms such as di-alkyl maleate, di-n-amyl maleate, di-n-butyl maleate, di-i-amyl maleate, di-i-butyl maleate, dimethyl maleate, di-n-propyl maleate, dioctyl maleate, dinonyl maleate, etc.; allyl alkyl ether having an alkyl group of 1 to 8 carbon atoms such as allyl ethyl ether, allyl n-octyl ether, etc.; a diene compound such as dicyclopentadiene, butadiene, isoprene, chloroprene, phenylpropdiene, cyclopentadiene, 1,5-nobornadiene, 1,3-cyclohexadiene, 1,4-cyclohexadiene, 1, 5-cyclohexadiene, 1,3-cyclooctadiene, etc.; and other vinyl monomers such as ally methacrylate, acrylic acid, methacrylic acid, maleic acid, maleic anhydride, vinyl acetate, etc. The above mentioned compounds may be used alone or in combination of two or more.

The component (b4) as a radical initiator includes, for example, an organic peroxide such as methyl ethyl ketone peroxide, di-t-butyl peroxide, 1,1-bis (t-butylperoxy)-3,3,5-trimethylcyclohexane, n-butyl-4,4-bis (t-butylperoxy) valerate, 2,5-dimethylhexan-2,5-dihydroperoxide, α,α'-bis (t-butylperoxy-m-isopropyl) benzene, 2,5-dimethyl-2,5-di (t-butylperoxy) hexane, 2,5-dimethyl-2,5-di (t-butylperoxy) hexyne-3, benzoyl peroxide, etc.; and an azo compound such as 1,1'-azobis (cyclohexane-1-carbonitrile), 1-[(1-cyano-1-methylethyl) azo] formamide, 2-phenylazo-4-methoxy-2,4-dimethylvaleronitrile, 2,2'-azobis (2-methylbutylonitrile), 2,2'-azobisisobutylonitrile, 2,2'-azobis (2,4,4-trimethylpentane), 2,2'-azobis (2-acetoxypropane), 2,2'-azobis (2-acetoxybutane), etc. The above mentioned compounds may be used alone or in combination of two or more. A specific and desired initiator may be selected depending on polymerization conditions such as impregnation temperature and time, polymerization temperature and time, and the like, as well as depending molecular weight, viscosity, etc. of an obtained polymer.

The component (b4) is used in a proportion of 0.01 to 10 parts, preferably 0.05 to 5 parts based on the total 100 parts of the components (b2) and (b3). At a higher level of the component (b4) than the proportion described above, a polyolefin resin as the component (b1) is excessively crosslinked if, for example, a coplymer such as ethylene-propylene copolymer or ethylene-propylene-diene terpolymer is used as the component (b1), or causes a decrease in molecular weight due to breakage of a backbone chain if, for example, polypropylene is used as the component (b1). On the other hand, the polymerization reaction proceeds insufficiently at a lower level of the component (b4) than the proportion described above.

An aqueous suspension containing these components (b1) to (b4) is prepared, for example, by adding the components (b1) to (b4) to an aqueous medium (normally water containing 0.005 to 0.1 % of an emulsifier and 0.1 to 3 % of a dispersing agent) at a temperature of about 30°C lower than the decomposition temperature of the component (b4) (a temperature at which a half-life thereof is one hour). It is also possible to prepare the aqueous suspension by adding the component (b1) only or the components (b1) and a part of (b2), in which a residual components (b2) and (b3) are added thereto arbitrarily until the end point of polymerization. Preferably, a total amount of the components (b1) to (b4) is fallen in a range of 20 to 100 parts based on 100 parts of the aqueous medium.

The aqueous suspension thus prepared is heated in a closed pressure vessel to impregnate the components (b2) and (b3) into the component (b1) and to polymerize the components (b2) and (b3), thereby the graft modified polyolefin resin as the component (B) beign formed. Heating of the aqueous suspension is conducted by rising to a temperature of about 10 to 50 °C lower than the decomposition temperature of the composition (b4), keeping the thus risen temperature for a while, than rising to about the above mentioned decomposition temperature and keeping it up to the end point of polymerization, or by simply rising to the decomposition temperature of the component (b4) and keeping it until the end point of polymerization.

The glycidyl group containing vinyl copolymer as the component (C) is used to synergistically act with the graft modified polyolefin resin as the component (B), thereby yielding the present resin composition of outstanding blow molding properties.

An example of the component (C) includes a copolymer of 99 to 50 %, preferably 99 to 75 % of at least one vinyl monomer selected from the group consisting of styrene, α-methylstyrene, acrilonitrile, methyl methacrylate, butyl methacrylate, brominated styrene and phenyl maleinimide and 1 to 50 %, preferably 1 to 25 % of glycidyl methacrylate.

As the glycidyl methacrylate content decreases to a level less than the above mentioned range, blow molding properties of the resin composition decrease, while molding fluidity thereof considerably goes down when its content increases.

A proportion of the components (A) (polyester resin), (B) (graft modified polyolefin resin), and (C) (glycidyl group containing vinyl copolymer) of the present invention is 1 to 100 parts, preferably 1 to 50 parts of (B) and 0.1 to 20 parts, preferably 0.2 to 10 parts of (C) based on 100 parts of (A).

Balance of properties of the resin such as melt tension, molding fluidity, impact resistance, stiffness, surface characteristics, chemical resistance and the like are lost in proportion of the components (A) to (C) other than, the above mentioned range.

In order to prepare the molding resin composition of the present invention, there may be employed any method in which the component (A) is reacted with glycidyl groups of the components (B) and (C). For example, the components (A), (B) and (C) are mixed homogeneously by means of a stirrer and then melt-kneaded.

As a manner of melt-kneading is not especially restricted, a well known conventional blender such as an extruder, heated roll, Brabender, Banbury mixer, etc. may be used for such melt-kneading.

If necessary, organic or inorganic fillers, fire reterdants or catalysts to increase reactivity between the component (A) and the other two components may be used in the molding resin composition of the present invention.

These fillers include, for example, silica, talc, mica, glass fiber, neutral clay, carbon fiber, aromatic polyamide fiber, silicon carbide fiber, titanic acid fiber, etc. The fillers may be used alone or in combination of two or more.

The fillers may be used in proportion of 1 to 100 parts, preferably 10 to 50 parts based on 100 parts of the present resin composition comprising the components (A) to (C).

The fire retardants which may be used in the present resin composition include, for example, halogenated fire retardants such as tetrabromobisphenol A, 2,2-bis (4-hydroxy-3,5-dibromophenyl) propane, hexabromobenzene, tris (2,3-dibromopropyl) isocyanurate, 2,2-bis (4-hydroxyethoxy-3,5-dibromophenyl) propane, decabromodiphenyl oxide, brominated polyphosphate, chlorinated polyphosphate, chlorinated paraffin, etc.; phosphorus fire retardants such as ammonium phosphate, tricresyl phosphate, triethyl phosphate, trichloroethyl phosphate, tris (β-chloroethyl) phosphate, tris (dichloropropyl) phosphate, cresylphenyl phosphate, xylenyldiphenyl phosphate, acid phosphate, nitrogen containing phosphorus compounds, etc.; inorganic fire retardants such as red phosphorus, tin oxide, antimony trioxide, zirconium hydroxide, barium metaborate, aluminum hydroxide, magnesium hydroxide, etc.; and macromolecular fire retardants such as brominated polystyrene, brominated poly-α-methylstyrene, brominated polycarbonate, brominated polyepoxy resin, chlorinated polyethylene, chlorinated poly-α-methylstyrene, chlorinated polycarbonate, chlorinated polyepoxy resin, etc.

These may be used alone or in combination of two or more.

These fire retardants may be used in proportion of 1 to 50, preferably 1 to 30 parts of the components (A) to (C) in the present resin composition.

The catalysts which may be used in the present resin composition is not especially restricted and generally, selected in combination of one or more compounds which promote a reaction between a carboxyl-, hydroxyl- or ester group and a glycidyl group. Preferably, there may be used an amine comopound such as tertiary amine and quaternary ammonium salt; a phosphorus compound such as phosphonium salt and phosphine; or imidazoles.

The present resin composition will be explained in greater detail by way of the following examples. It is to be understood that the present invention is not limited to such examples and can be embodied within the spirit and the scope thereof.

### Preparation Exampe 1 : Preparation of Graft Modified Polyolefin Resin (MPO1)

Into a closed pressure reactor, 1400 parts of pure water, 490 parts of polypropylene particles (ethylene content: 3 %; DSC melting point: 147 °C ; in a form of pellet), 35 parts of N-[4-(2,3-epoxypropoxy)-3,5-dimethylbenzyl] acrylamide, 175 parts of styrene, 1.26 parts of di-t-butylperoxide (decomposition temperature: 143°C), 10.5 parts of calcium tertiary phosphate and 0.315 part of Latemul PS ® (an emulsifier available from Kao Ltd.) were charged, then mixed with stirring to form an aqueous suspension. The suspension thus obtained was stirred at 100 °C for an hour to impregnate N-[4-(2,3-epoxypropoxy)-3,5-dimethylbenzyl] acrylamide and stryene to polypropylene particles, followed by raising temperature up to 150 °C and stirring for further two hours to complete polymerization.

The particles thus obtained were washed with water, calcium tertiary phosphate and Latemul PS were removed therefrom and dried to obtain a graft modified polyolefin resin (MPO1).

### Preparation Exampe 2 : Preparation of Graft Modified Polyolefin Resin (MPO2)

Into a closed pressure reactor, 1400 parts of pure water, 500 parts of ethylene-propylene copolymer rubber particles (propylene content: 26 %; in a form of pellet), 62. 5 parts of N-[4-(2,3-epoxypropoxy)-3,5-dimethylbenzyl] acrylamide, 62.5 parts of styrene, 1.5 parts of 1,1-bis (t-butylperoxy) 3,3,5-trimethylcyclohexane (decomposition temperature: 108°C), 10.5 parts of calcium tertiary phosphate and 0.315 part of Latemul PS ® were charged, then mixed with stirring to form an aqueous suspension. The suspension thus obtained was stirred at 95°C for an hour to impregnate N-[4-(2,3-epoxypropoxy)-3,5-dimethylbenzyl] acrylamide and stryene to the ethylene-propylene copolymer rubber particles, followed by raising temperature up to 110 °C and stirring for further three hours to complete polymerization.

The particles thus obtained were washed with water, calcium tertiary phosphate and Latemul PS were removed therefrom and dried to obtain a graft modified polyolefin resin (MPO2).

### Preparation Exampe 3 : Preparation of Graft Modified Polyolefin Resin (MPO3)

Into a closed pressure reactor, 1400 parts of pure water, 500 parts of ethylene-propylene copolymer rubber particles (propylene content: 26 %; in a form of pellet), 31 parts of N-[4-(2,3-epoxypropoxy)-3,5-dimethylbenzyl] acrylamide, 31 parts of glycidyl methacrylate, 63 parts of styrene, 1.5 parts of 1,1-bis (t-butylperoxy) 3,3,5-trimethylcyclohexane, 10.5 parts of calcium tertiary phosphate and 0.315 part of Latemul PS ® were charged, then mixed stirring to form an aqueous suspension. The suspension thus obtained was stirred at 95 °C for an hour to impregnate N-[4-(2,3-epoxypropoxy)-3,5-dimethylbenzyl] acrylamide, glycidyl methacrylate, and styrene to the ethylene-propylene copolymer rubber particles, followed by raising temperature up to 110 °C and stirring for further three hours to complete polymerization.

The particles thus obtained were washed with water, calcium tertiary phosphate and Latemul PS were removed therefrom and dried to obtain a graft modified polyolefin resin (MPO3).

### Preparation Exampe 4 : Preparation of Graft Modified Polyolefin Resin (MPO4)

Into a closed pressure reactor, 1400 parts of pure water, 500 parts of ethylene-propylene-ethylidenenorbornene copolymer rubber particles (propylene content: 24 %; ethylidenenorbornene content: 5 %; in a form of pellet), 40 parts of N-[4-(2,3-epoxypropoxy)-3,5-dimethylbenzyl] acrylamide, 20 parts of methyl methacrylate, 60 parts of styrene, 1.5 parts of 1,1-bis (t-butylperoxy) 3,3,5-trimethylcyclohexane, 10.5 parts of calcium tertiary phosphate and 0.315 part of Latemul PS ® were charged, then mixed stirring to form an aqueous suspension. The suspension thus obtained was stirred at 95 °C for an hour to impregnate N-[4-(2,3-epoxypropoxy)-3,5-dimethylbenzyl] acrylamide, methyl methacrylate and styrene to the ethylene-propylene-ethylidenenorbornene copolymer rubber particles, followed by raising temperature up to 110 °C and stirring for further three hours to complete polymerization.

The particles thus obtained were washed with water, calcium tertiary phosphate and Latemul PS were removed therefrom and dried to obtain a graft modified polyolefin resin (MPO4).

### Preparation Exampe 5 : Preparation of Graft Modified Polyolefin Resin (MPO5)

Into a closed pressure reactor, 1400 parts of pure water, 500 parts of ethylene-propylene copolymer rubber particles (propylene content: 26 %; in a form of pellet), 45 parts of glycidyl methacrylate, 90 parts of styrene, 1.5 parts of 1,1-bis (t-butylperoxy) 3,3,5-trimethylcyclohexane, 7.5 parts of calcium tertiary phosphate and 0.3 part of Latemul PS ® were charged, then mixed stirring to form an aqueous suspension. The suspension thus obtained was stirred at 60 °C for an hour to impregnate glycidyl methacrylate and styrene to the ethylene-propylene copolymer rubber particles, followed by raising temperature up to 110 °C and stirring for further three hours to complete polymerization.

The particles thus obtained were washed with water, removed calcium tertiary phosphate and Latemul PS were removed therefrom and dried to obtain a graft modified polyolefin resin (MPO5).

### Comparative Preparation Exampe 1 : Preparation of Modified Polyolefin Resin (PO)

A hundred parts of ethylene-propylene copolymer rubber particles (propylene content: 26 %; in a form of pellet), 15 parts of N-[4-(2,3-epoxypropoxy)-3,5-dimethylbenzyl] acrylamide and 0.23 part of n-butyl-4,4-bis (t-butylperoxy) valerate (decomposition temperature: 123 °C ) were dry-blended, then fed to a 45 mm biaxial extruder at a feed rate of 15 kg/hr, and melt-kneaded at a cylinder temperature of 200°C to pelletize. Pellets thus obtained were dried at 50 °C for 12 hours to obtain a modified polyolefin resin (PO1).

### Examples 1 to 8 and Comparative Examples 1 to 4

Each component in each proportion as shown in Table 1 was used to form molding resin compositons, from which properties evaluating test pieces were prepared. These resin compositions and test pieces were prepared as in the following.

Each component in each proportion as shown in Table 1 was dry-blended in a Henschel mixer, fed to a 45 mm biaxial extruder at a feed rate of 15 kg/hr, melt-kneaded at a cylinder temperature of 240 °C to pelletize. Pellets thus obtained were dried at 120 °C for four hours to form desired molding resin compositions.

Extrusion molding properties, melt viscosity and melt tension of the formed resins were determined as will be described below. The results obtained are shown in Table 1.

Test pieces were prepared from molding resin compositions thus obtained and impact resistance, tensile properties, flexural properties and thermal deformation temperature thereof were determined by the test methods as will be described below. Preparation of such test pieces were conducted by injection molding the resins using an injection machine at a cylinder temperature of 250 °C and a mold temperature of 60 °C. The results are shown in Table 1.

In Table 1, PBT is Juranex 2002 ® available from Polyplastics Co., Ltd., MPO1 to MPO5 are graft modified polyolefin resins prepared according to Preparation Examples 1 to 5, C-1 is a styrene/glycidyl methacrylate copolymer (available from Arakawa Chemical Industry Co., Ltd. as GMA-9 ®), C-2 is a styrene/acrylonitrile/glycidyl methacrylate terpolymer (available from Nihon Yushi Co., Ltd. as Blenmer CP-20SA ®), BF is an ethylene/glycidyl methacrylate copolymer (available from Sumitomo Chemical Industry Co., Ltd. as Bondfast 2C ®), PO is a modified polyolefin prepared according to Comparative Preparation Example 1, and the reaction catalyst is tetrabutylphosphonium bromide (available from Aldrich).

### (Extrusion Molding Properties)

Based on the following criteria, extrusion molding properties were evaluated from resin pressure and torque of the extruder when resin compositions were prepared using the above mentioned biaxial extruder:
Very Good: resin pressure is stable during extrusion;
Good: resin pressures is changed slightly during extrusion;
Not Good: torque and resin pressure are unstable and extremely changed during extrusion.

### (Melt Viscosity)

Molding resin compositions were fed to a cylinder heated to a temperature of 255 °C, allowed to reside therein for five minutes under a heating condition, and to flow out through a dice of 1 mm in diameter at a piston speed of 100 mm/minute. Melt viscosity of the resin compositions thus treated was determined using a capillary rheometer.

### (Melt Tension)

Molding resin compositions were fed to a cylinder heated to a temperature of 255 °C, allowed to reside therein for five or 20 minutes, respectively, under a heating condition, and to flow out through a dice of 1 mm in diameter at a piston speed of 1 mm/minute, followed by a stretching at stretching speed of 1 m/minute. Melt tension of the resin compositions thus treated was determined using a capillary rheometer.

### (Impact Properties)

According to ASTM D256, notched Izot impact strength was determined at 23 °C.

### (Tensile Properties)

According to ASTM D638, tensile elongation at break was determined.

### (Flexural Properties)

According to ASTM D790, flexural modulus and maximum flexural strength were determined.

### (Thermal Deformation Temperature)

According to ASTM D648, thermal deformation temperature was determined at a load of 4.6 kg/cm².

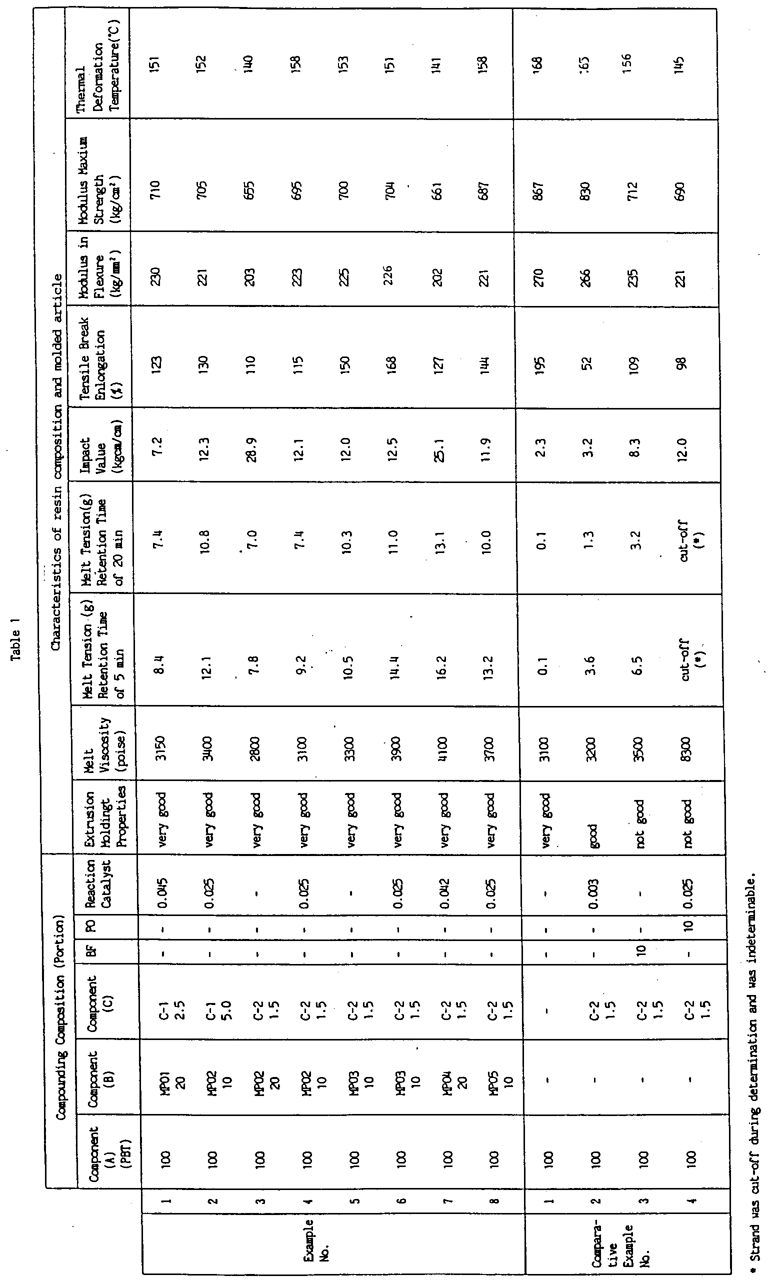

### Industrial Applicability

The resin composition of the present invention has outstanding mechanical properties such as blow molding properties, impact resistance and tensile properties, etc., as well as stable molding fluidity and usefulness for recycling, and provides useful molded articles such as various parts for automobile, machineries, electric and electronics, etc.

## Claims

1. A molding resin composition which comprises:
(A) 100 parts by weight of a polyester resin,
(B) 1 to 100 parts by weight of a graft modified polylefin resin prepared by the steps of:
forming a aqueous suspension containing
(b1) 100 parts by weight of a polyolefin resin,
(b2) 0.1 to 30 parts by weight of at least one monomer having at least one glycidyl group, which is selected from the group consisting of a monomer represented by the following formula (I): 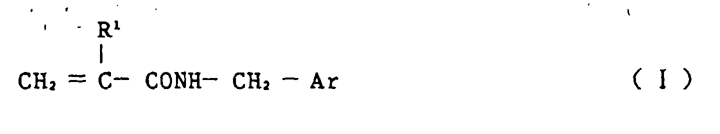 wherein Ar represents an aromatic hydrocarbon group having 6 to 23 carbon atoms bonded to at least one glycidyloxy group and R¹ represents a hydrogen atom or methyl group,
and a monomer represented by the following formula (II): 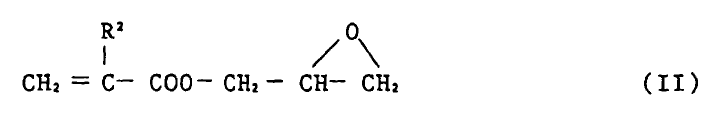 wherein R² represents a hydrogen atom or a methyl group,
(b3) 1 to 500 parts by weight of a vinyl monomer, and
(b4) 0.001 to 10 parts by weight of a radical initiator based on 100 parts of the total weight of the components (b2) and (b3),
impregnating the component (b1) with the components (b2) and (b3) in said aqueous suspension, and
polymerizing the components (b2) and (b3), and
(C) 0.1 to 20 parts by weight of a glycidyl group containing vinyl copolymer comprising 99 to 50 % by weight of at least one vinyl monomer selected from the group consisting of styrene, α-methylstyrene, acrylonitrile, methyl methacrylate, butyl methacrylate, brominated styrene and phenyl maleinimide and 1 to 50 % by weight of glycidyl methacrylate.

2. The molding resin composition claimed in Claim 1, in which the component (A) is polyethylene terephthalate, polybutylene terephthalate or a mixture thereof.

3. The molding resin composition claimed in Claim 1, in which the component (b1) is a polymer comprising at least one monomer selected from the group consisting of ethylene, propylene, 1-butene, isobutene, 1-pentene, butadiene, isoprene, chloroprene, cyclopentadiene, phenylpropadiene, dicyclopentadiene, 1,4-hexadiene, 1,4-heptadiene, 1,3-cyclohexadiene, 1,3-octadiene, 1,5-cyclooctadiene, 6-methyl-1,5-heptadiene, 2,5-norbornadiene, 2-methyl-2,5-norbornadiene, 5-methylidene-2-norbornene, 5-ethylidene-2-norbornene, 5-n-propylidene-2-norbornene, 5-isobutylidene-2-norbornene, 5-n-butylidene-2-norbornene and methyltetrahydroindene, or mixtures of more than two kinds of said polymers.

4. The molding resin composition claimed in Claim 1, in which the component (b2) is represented by the following formula (III):

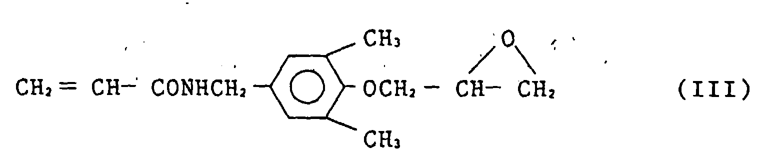

5. The molding resin composition claimed in Claim 1, in which the component (b2) is glycidyl methacrylate.

6. The molding resin composition claimed in Claim 1, in which the component (b2) is a mixture of 1 to 99 % of a compound represented by the following formula (III): 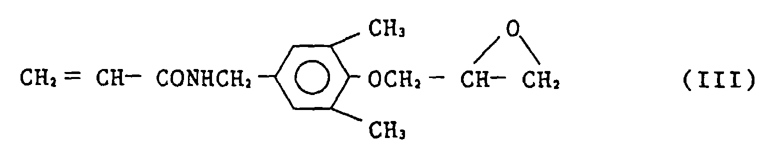 and 99 to 1 % by weight of glycidyl methacrylate.

7. The molding resin composition claimed in Claim 1, in which the component (b3) is at least one compound selected from the group consisting of an aromatic vinyl compound, an alkyl acrylate having an alkyl group of 1 to 22 carbon atoms, an alkyl methacrylate having an alkyl group of 1 to 22 carbon atoms, a vinyl alkyl ether having an alkyl group of 1 to 22 carbon atoms, vinyl alcohol, an unsaturated nitrile compound, an unsaturated amino compound, a dialkyl maleate having alkyl groups of 1 to 9 carbon atoms, an allyl alkyl ether having an alkyl group of 1 to 8 carbon atoms, allyl acrylate, a diene compound, maleic anhydride, maleic acid, acrylic acid, methacrylic acid and vinyl acetate.

8. The molding resin composition in which 1 to 100 parts of at least one filler selected from the group consisting of silica, talc, mica, glass fiber, neutral clay, carbon fiber, aromatic polyamide fiber, silicon carbide fiber and titanic acid fiber are added to 100 parts of the molding resin composition claimed in any one of Claims 1 to 7.

9. The molding resin composition in which 1 to 50 parts of at least one fire retardant selected from the group consisting of halogenated fire retardants composed of tetrabromobisphenol A, 2,2-bis (4-hydroxy-3,5-dibromophenyl) propane, hexabromobenzene, tris (2,3-dibromopropyl) isocyanurate, 2,2-bis (4-hydroxyethoxy-3,5-dibromophenyl) propane, decabromodiphenyl oxide, brominated polyphosphate, chlorinated polyphosphate and chlorinated paraffin, phosphorus fire retardants composed of ammonium phosphate, tricresyl phosphate, triethyl phosphate, trischloroethyl phosphate, tris (β-chloroethyl) phosphate, tris (dichloropropyl) phosphate, cresylphenyl phosphate, xylenyldiphenyl phosphate, acid phosphate, nitrogen containing phosphorus compounds, inorganic fire retardants composed of red phosphorus, tin oxide, antimony trioxide, zirconium hydroxide, barium metaborate, aluminum hydroxide, magnesium hydroxide, and macromolecular fire retardants composed of brominated polystyrene, brominated poly-α-methylstyrene, brominated polycarbonate, brominated polyepoxy resin, chlorinated polyethylene, chlorinated poly-α-methylstyrene, chlorinated polycarbonate and chlorinated polyepoxy resin, are added to 100 parts of (A) to (C) contained in the molding resin composition claimed in any one of Claims 1 to 8.
